Europäisches Patentamt

(19) European Patent Office

Office européen des brevets

(11) Numéro de publication: **0 020 264**
**B1**

(12) **FASCICULE DE BREVET EUROPEEN**

(45) Date de publication du fascicule du brevet: **09.05.84**

(51) Int. Cl.³: **F 28 D 7/00**

(21) Numéro de dépôt: **80400749.0**

(22) Date de dépôt: **28.05.80**

(54) Echangeur de chaleur du type semi-modulaire pour réacteur nucléaire.

(30) Priorité: **31.05.79 FR 7914000**

(43) Date de publication de la demande:
**10.12.80 Bulletin 80/25**

(45) Mention de la délivrance du brevet:
**09.05.84 Bulletin 84/19**

(84) Etats contractants désignés:
**BE DE FR GB IT NL**

(56) Documents cités:
**FR - A - 1 271 202**
**FR - A - 1 399 180**
**FR - A - 2 360 057**
**FR - A - 2 369 658**
**FR - A - 2 379 881**
**FR - A - 2 385 067**
**GB - A - 2 004 361**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Artaud, Robert**
**9, Avenue Claude Debussy**
**F-13100 Aix En Provence (FR)**
Inventeur: **Aubert, Michel**
**Chemin de Sainte Roustagne**
**F-04100 Manosque (FR)**
Inventeur: **Elbeze, Richard**
**Val de la Torse Aramis 3**
**F-13100 Aix En Provence (FR)**
Inventeur: **Jogand, Patrick**
**"La Biadouire"**
**F-84240 La Tour D'Aigues (FR)**

(74) Mandataire: **Mongrédien, André et al,**
**c/o BREVATOME 25, rue de Ponthieu**
**F-75008 Paris (FR)**

Courier Press, Leamington Spa, England.

# Description

La présente invention a pour objet un échangeur de chaleur du type semi-modulaire pour réacteur nucléaire et plus particulièrement pour réacteur nucléaire à neutrons rapides refroidis par un métal liquide et du type intégré.

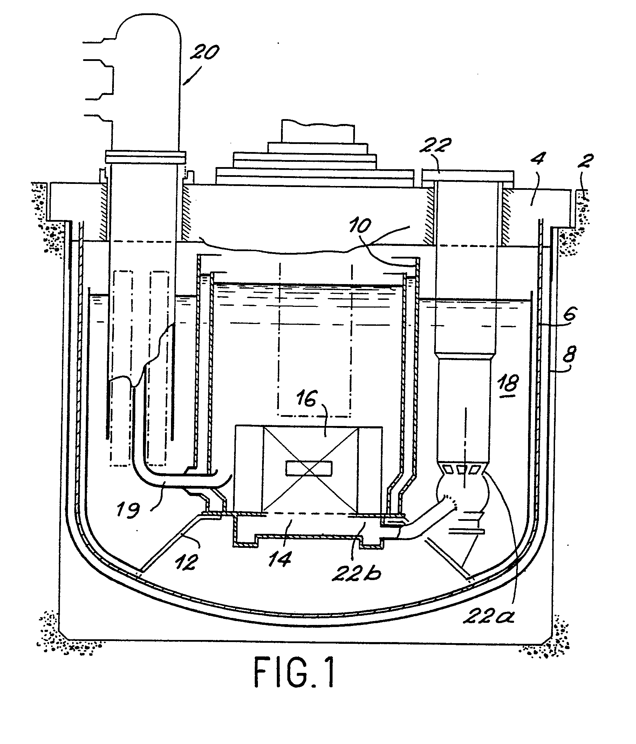

Afin de mieux faire comprendre l'invention, on a représenté sur la figure 1, une vue en coupe verticale d'un réacteur intégré. Sur cette figure, on retrouve de façon connue le massif bétonné 2 fermé à sa partie supérieure par la dalle 4. La cuve principale 6 qui renferme l'ensemble du circuit primaire est suspendue à cette dalle 4 et doublée par une cuve de sécurité 8.

A l'intérieur de la cuve principale 6, on trouve une cuve interne 10 qui est supportée par un platelage 12 reposant sur la cuve principale. La cuve interne sépare, d'une part, le métal liquide chaud en général du sodium, sortant du coeur 16 supporté par le platelage et, d'autre part, le métal froid contenu dans l'espace annulaire 18 compris entre la cuve principale 6 et la cuve interne 10. Dans ce type de réacteur, le sodium chaud sortant du coeur est repris par des conduites 19 qui introduisent le sodium chaud sortant du coeur dans des échangeurs intermédiaires 20. Des pompes 22, 22a logées également dans l'espace annulaire 18 assurent la mise en circulation du fluide primaire, en réinjectant ce métal liquide à la base du coeur dans le sommier 14 par l'intermédiaire de conduites 22b.

On connaît déjà des réacteur nucléaires de ce type utilisant des échangeurs de chaleur intermédiaires du type modulaire. On peut par exemple citer à ce propos le FR—A—2385 067 déposée au nom du demandeur pour "Echangeur thermique annulaire" et le FR—A—2397 613 déposée au nom du demandeur pour "Echangeur thermique annulaire".

Le brevet FR—A—2 379 881 enseigne par ailleurs, dans un ensemble pompe-échangeur, de réaliser le supportage de la pompe au moyen de tubes par lesquels la jupe de la pompe est suspendue à une plaque qui est elle-même suspendue à la dalle obturant la cuve du réacteur.

La présente invention concerne un échangeur de chaleur apte à absorber plus facilement que les échangeurs selon l'art intérieur les dilatations thermiques dont il est le siège du fait des différences de température des deux fluides circulant dans l'échangeur.

L'échangeur selon l'invention peut être qualifié de semi-modulaire. En effet, il est constitué par plusieurs modules d'échange, mais ces modules d'échange comportent une alimentation en métal liquide primaire commune et ils sont mécaniquement reliées les uns aux autres.

Chaque module comprend un faisceau de tubes droits ou "sensiblement" droits. Cette dernière expression signifie que les tubes peuvent comporter sur une fraction de leur longueur, notamment à leurs extrémités, des parties en forme de portion d'hélice destinées à conférer aux tubes une plus grande souplesse.

L'invention concerne un échangeur de chaleur pour un réacteur nucléaire dont la cuve est obturée par une dalle, l'échangeur étant du type comportant une virole externe à axe vertical, ladite virole étant munie à son extrémité supérieure d'une bride de supportage qui repose sur la dalle par l'intermédiaire d'un manchon de supportage, ladite virole étant prolongée par un dôme supérieur raccordé à la virole, un collecteur d'entrée et un collecteur de sortie pour un fluide secondaire, ces collecteurs définissant un premier sous-ensemble disposé à l'intérieur du dôme supérieur, plusieurs modules d'échange thermique définissant un deuxième sous-ensemble disposé dans la virole externe, chacun desdites modules comprenant des tubes verticaux sensiblement droits débouchant dans une chambre d'entrée de fluide secondaire et des orifices pour l'introduction et la sortie d'un fluide primaire dans chaque module, plusieurs conduites d'alimentation reliant le collecteur d'entrée à chaque chambre d'entrée, plusieurs conduites d'évacuation reliant le collecteur de sortie à chaque chambre de sortie et plusieurs plaques de protection biologiques, ces plaques définissant un troisième sous-ensemble disposé dans la virole externe au niveau de ladite dalle; cet échangeur est caractérisé en ce qu'il comprend de plus au moins une plaque de base fixée sur sa périphérie à ladite virole externe, chacun desdites sous-ensembles étant relié à ladite virole externe par une seule plaque de base, chaque module étant suspendu à la plaque de base correspondante par une virole de supportage traversant cette dernière et reliée, d'une part, à l'extrémité supérieure du module et, d'autre part, à la plaque de base correspondante, lesdites conduites d'alimentation et lesdites conduites d'évacuation traversant d'une manière étanche ladite plaque de base correspondante et comprenant entre lesdites collecteurs et ladite plaque de base correspondante des parties prévues pour absorber l'expansion thermique desdites conduites, l'étanchéité entre les conduites d'alimentation et la plaque de base étant réalisée par des moyens d'étanchéité extensibles.

Selon une première variante de réalisation, l'échangeur comprend une seule plaque de base en dessous de ladite dalle, les collecteurs étant reliés à ladite plaque de base par une structure de supportage solidaire par son extrémité inférieure de la plaque de base.

Selon une deuxième variante, une deuxième plaque de base est prévue au niveau de ladite bride de supportage, les collecteurs étant reliés à cette deuxième plaque de base par une structure de supportage solidaire par son extrémité inférieure de la deuxième plaque de base.

De préférence, les parties des conduites d'alimentation et d'évacuation en fluide secondaire permettant d'absorber l'expansion thermique de ces conduites ont la forme d'une portion d'hélice faisant un angle d'environ 180°.

Ainsi, on peut absorber les dilatations thermiques entre les modules d'échange thermique et les collecteurs "chaud" et "froid".

De préférence encore, les chambres de sortie sont situées à la partie supérieure des modules d'échange et les conduites d'évacuation du fluide secondaire sont disposées à l'intérieur et coaxialement aux viroles de supportage, ces dernières assurant ainsi la traversée étanche de la plaque de base par lesdites conduites d'évacuation de fluide secondaire.

On voit qu'ainsi, les viroles jouent un double rôle. D'une part, elles solidarisent les modules à la plaque de base en assurant leur supportage et, d'autre part, elles assurent la traversée étanche de la plaque de base, ce qui est nécessaire puisque celle-ci constitue le fond de la cloche de gaz inerte qui surmonte le fluide primaire dans l'échangeur intermédiaire.

On décrira maintenant à titre d'exemple non limitatif, deux variantes de réalisation de l'invention en se référant aux dessins annexés dans lesquels:

— la figure 1, déjà décrite, représente une vue en coupe verticale d'un réacteur nucléaire à neutrons rapides du type intégré montrant l'implantation d'un échangeur intermédiaire,
— la figure 2a, représente une vue en coupe verticale de la partie supérieure de l'échangeur selon une première variante de l'invention,
— la figure 2b, représente une vue en coupe verticale de la partie inférieure de l'échangeur dont la partie supérieure est représentée sur la figure 2a,
— les figures 3a à 3c, représentent des vues en section horizontale de l'échangeur intermédiaire selon respectivement les plans A—A, B—B et C—C de la figure 2b, et
— la figure 4 représente une vue en coupe verticale de la partie supérieure de l'échangeur selon une deuxième variante de l'invention.

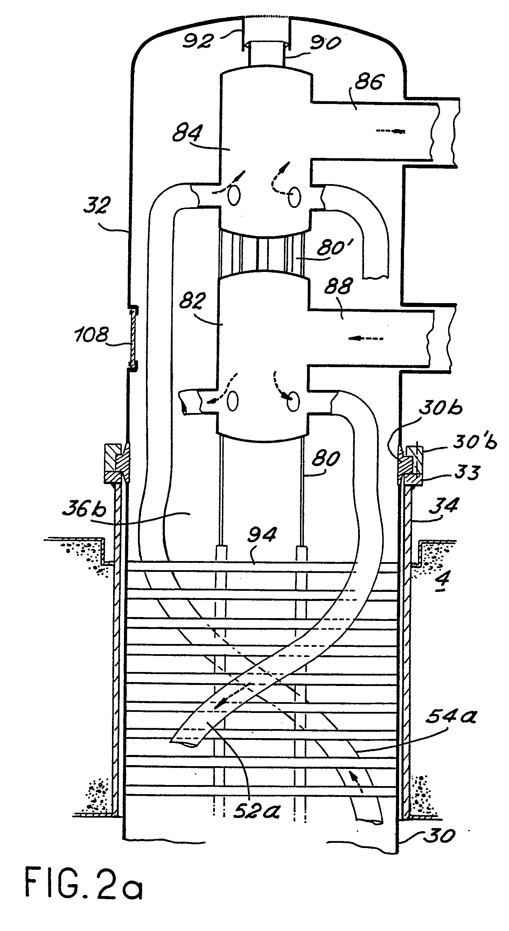

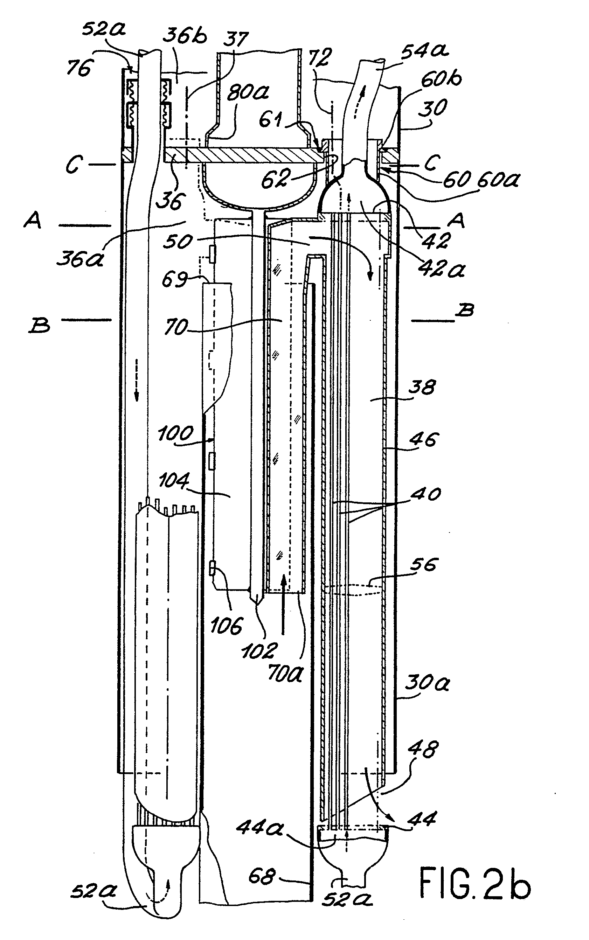

Comme on le voit sur les figures 2a et 2b, l'échangeur comprend une virole externe 30 ouverte à son extrémité inférieure 30a et munie à son extrémité supérieure d'une bride de supportage 30b. Cette virole externe 30 est prolongée par un dôme supérieur 32 raccordé à la virole. La bride 30b, qui est maintenue par une contre-bride 30'b s'appuie sur la dalle 4 par l'intermédiaire de la bride 33 et du manchon 34 de supportage. On comprend qu'ainsi l'ensemble de la virole 30 et du dôme 32 est supporté par la bride 30b qui s'appuie sur la dalle 4.

L'espace interne limité par la virole 30 est séparé par une plaque de base horizontale 36 en un espace inférieur 36a et en un espace supérieur 36b. Schématiquement, l'espace inférieur contient les modules d'échange thermique tels que 38, alors que l'espace supérieur contient les collecteurs d'entrée et de sortie du fluide secondaire (sodium liquide) circulant dans les modules d'échange 38. Chaque module d'échange 38 est constitué de façon connue par des tubes d'échange sensiblement droits 40 montés entre une plaque à tubes supérieure 42 et une plaque à tubes inférieure 44 raccordées respectivement à des chambres de sortie 42a et d'entrée 44a. Ces tubes d'échange sont entourés par une virole externe 46 comportant une fenêtre inférieure de sortie 48 pour le fluide primaire et une fenêtre d'entrée supérieure 50 pour ce même fluide primaire. La chambre d'entrée 44a est raccordée à une conduite d'alimentation 52a qui sera décrite plus en détail ultérieurement et la chambre de sortie 42a est raccordée à une conduite d'évacuation 54a qui sera également décrite plus en détail ultérieurement. On a symbolisé par 56 des structures qui permettent d'assurer le maintien des tubes d'échange 40 des modules d'échange 48.

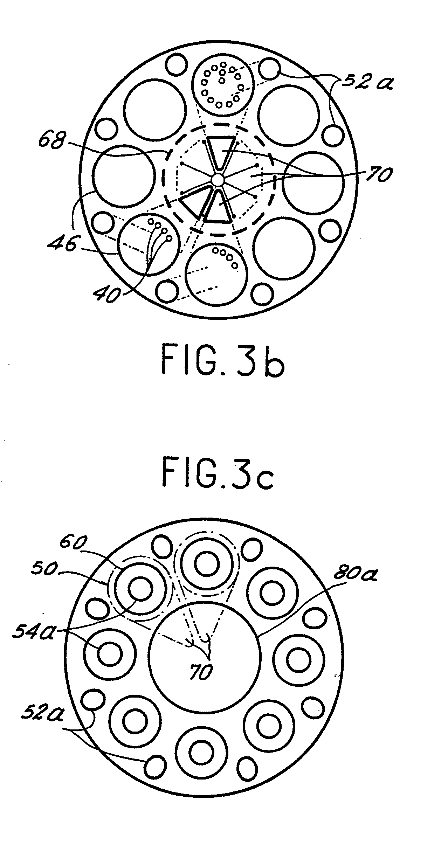

Selon une caractéristique essentielle de l'invention, chaque module d'échange 38 est suspendu par sa partie supérieure à la plaque de base 36. Cette suspension est réalisée avantageusement par l'intermédiaire d'une virole de supportage 60 dont l'extrémité inférieure 60a est soudée sur la chambre de sortie 42a, et dont l'extrémité supérieure 60b qui traverse la plaque 36 par un alésage 62 est soudée sur un manchon 61 lui-même solidarisé de la plaque de base 36. On voit qu'ainsi chaque module d'échange est supporté de façon rigide par la plaque de base. Bien entendu, il en va de même pour l'ensemble des modules d'échange de l'échangeur intermédiaire. Comme on le voit mieux sur la figure 3c, les conduites 54a sont disposées à l'intérieur des viroles 60. On réalise ainsi la traversée étanche de la plaque de base 36 par les conduites 54a.

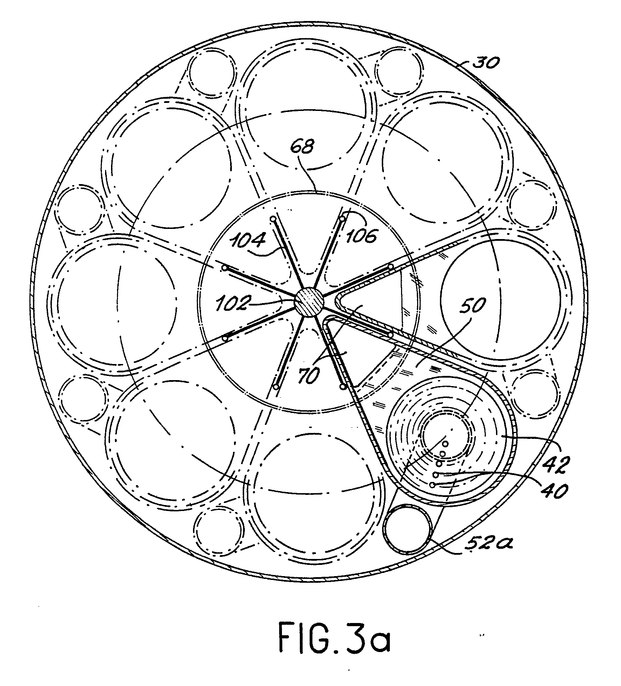

La sortie du métal liquide primaire des modules d'échange se fait par les fenêtres inférieures 48. L'entrée de ce métal liquide primaire qui est prélevé dans la cuve interne par les conduites 19 est guidé par la cheminée centrale 68 de l'échangeur intermédiaire, cheminée centrale dans laquelle plongent des conduites individuelles d'introduction 70 raccordées à leur partie supérieure aux fenêtres d'introduction 50. Comme, on le voit sur les figures 3a et 3b, les conduites 70 ont en section droite la forme de secteurs de cercle. Il faut ajouter que la plaque de base 36, en plus de son rôle de supportage des modules d'échange 38, constitue le fond de la cloche de gaz inerte, par exemple d'argon, limitée latéralement par la virole externe 30. Une tubulure d'argon 37 permet d'introduire dans le fond de cette cloche une quantité d'argon telle que, pour tous les régimes de fonctionnement du réacteur, les deux conditions suivantes soient satisfaites:

— le niveau du sodium primaire chaud est constamment compris entre l'extrémité inférieure 70a des conduits 70 et l'extrémité supérieure 60 de la cheminée centrale 68,
— le niveau du sodium primaire froid (à l'extérieur des modules 38) est constamment situé au-dessus du bord de l'extrémité inférieure 30a de la virole externe 30.

En outre, des conduites 72 permettent d'introduire de l'argon dans la région supérieure de la fenêtre d'entrée 50 de chaque module pour pouvoir éventuellement arrêter l'alimentation en sodium primaire du module considéré.

Comme on le voit sur la figure 2b, les conduites 52a présentent une partie courbée et remontent à l'intérieur de la virole 30 parallèlement aux modules. L'étanchéité de la traversée de ces conduites 52a à travers la plaque de base 36 est assurée par des soufflets métalliques de dilatation 76 qui sont fixés d'une part à la plaque de base 36 et d'autre part à la paroi externe des conduites 52a. Ainsi, l'ensemble des conduites de sodium secondaire 52a et 54a traverse d'une manière étanche la plaque de base 36, tout en permettant les dilatations thermiques puis-qu'aucune de ces conduites n'est directement fixée sur la plaque de base.

En se référant à la figure 2a, on va expliquer la façon dont se fait dans cette première variante l'introduction du métal liquide secondaire ainsi que son évacuation dans un module d'échange.

Une structure de supportage cylindrique 80 solidaire par son extrémité inférieure 80a de la face supérieure de la plaque de base 36 supporte d'une part un collecteur froid 82, et d'autre part, un collecteur chaud 84 qui est disposé au-dessus du collecteur froid 82. Les conduites de sortie 54a du métal liquide secondaire chaud sont raccordées à leur extrémité supérieure au collecteur chaud 84. Dans la partie supérieure de la virole 30, et dans le dôme 32, ces conduites 52a ont la forme d'une portion d'hélice faisant un angle de 180°. Elles peuvent ainsi absorber une partie des dilatations de ces conduites dues aux températures intervenant dans l'échangeur. Le collecteur chaud est muni d'une grosse conduite 86 de sortie du métal liquide chaud secondaire allant vers un générateur de vapeur comme cela est bien connu dans les réacteurs à neutrons rapides refroidis par du sodium liquide. De même, les conduites 52a d'entrée du métal liquide secondaire froid sont raccordées au collecteur froid 82 et forment chacune à l'intérieur de la virole 30 une hélice correspondant à un angle de 180°. De la même façon, le collecteur froid 82 est muni d'une grosse conduite 88 servant à l'introduction du métal liquide secondaire froid. La partie 80' de la structure centrale 80 assure la liaison mécanique entre les deux collecteurs respectivement froid et chaud.

Il faut ajouter que le collecteur chaud est muni à sa partie supérieure d'une virole de guidage 90 qui coopère avec un manchon 92 solidaire de la partie supérieure du dôme 32.

On comprend bien qu'au niveau de la traversée de la dalle par l'échangeur intermédiaire, il y a rupture de la protection biologique assurée par la dalle 4 qui est réalisée en béton. La continuité de cette protection biologique est assurée par un ensemble de plaques, par exemple en plomb, telles que 94 qui sont horizontales et solidaires de la structure cylindrique de supportage 80 dans la variante de réalisation de la figure 2a. Bien entendu, ces plaques comportent des échancrures adéquates pour permettre le passage des conduites 52a et 54a.

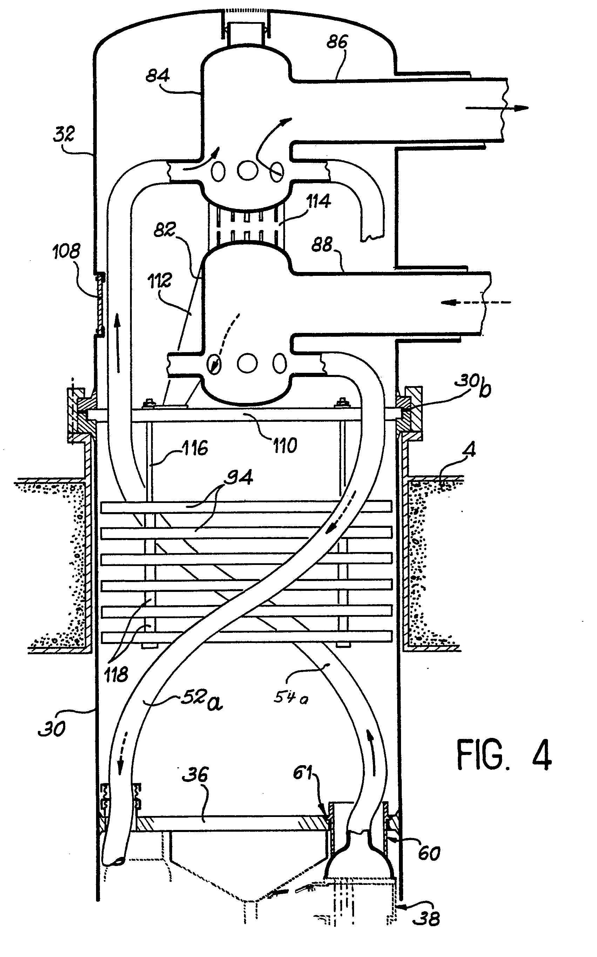

Selon une deuxième variante de réalisation représentée sur la figure 4, le supportage des collecteurs et des plaques de protection biologique n'est plus effectué par la plaque de base 36 mais par une plaque de supportage 110 disposé au-dessus de la plaque 36, au niveau de la bride de supportage 30b. Dans cette variante, les mêmes chiffres de référence ont été utilisés pour désigner les éléments identiques à ceux de la première variante.

Comme on vient de la voir, afin de soulager la plaque de base 36, les collecteurs d'entrée 82 et de sortie 84 sont supportés par une plaque de supportage 110 pincée entre les deux parties de la bride de supportage 30b appartenant à la virole 30 et au dôme 32. Plus précisément, le collecteur d'entrée 82 repose sur la plaque 110 par l'intermédiaire d'un support 112, le collecteur de sortie 84 étant disposé au-dessus du collecteur d'entrée et reposant sur ce dernier par l'intermédiaire d'une structure centrale 114 semblable à la partie 80' dans la variante de la figure 2a.

Les collecteurs 82 et 84 sont disposés tous deux au-dessus de la plaque de supportage 110 et le collecteur de sortie 84 est toujours muni à sa partie supérieure d'une virole 90 reçue dans un manchon 92 solidaire de la partie supérieure du dôme 32.

Comme on l'a déjà mentionné, les plaques de protection biologique 94 sont suspendues à la plaque de supportage 110 par exemple au moyen de tiges 116 munies d'espaceurs appropriés 118, les plaques 94 étant disposées au niveau de la dalle 4 et au-dessus de la plaque de base 36.

Bien entendu, les conduites d'alimentation 52a et d'évacuation 52b traversent des échancrures appropriées formées dans la plaque de supportage 110.

En se reportant aux figures 2b et 3a, on voit que les conduites 70 d'introduction dans les modules d'échange du métal liquide chaud primaire sont maintenues en place par un ensemble espaceur 110. Celui-ci comporte une tige centrale 102 suspendue en-dessous de la plaque de base 36 et des ailettes radiales 104 se terminant par des portions de tubes 106 qui assurent la calage mutuel des conduites d'introduction 70, évitant ainsi en particulier les vibrations de ces conduites.

On va maintenant décrire deux cas d'intervention sur cet échangeur.

La première intervention consiste à condamner un module d'échange à l'intérieur même de la cuve.

On arrête le fonctionnement du réacteur nucléaire et on vidange le circuit secondaire de métal liquide. Par un trou d'homme 108, ménagé dans le dôme 32, on opérateur peut pénétrer dans l'enceinte de l'échangeur intermédiaire. On procède à la découpe d'une longueur de conduite 52a et d'une longueur de conduite 54a associées au module d'échange défectueux; puis on soude sur ces conduites des bouchons assurant la condamnation du module d'échange considéré. On peut alors remettre en route l'échangeur intermédiaire qui fonctionne avec tous ses modules à l'exception de celui qui a été obturé.

La deuxième intervention consiste dans l'enlèvement d'un échangeur intermédiaire pour une opération de maintenance hors de la cuve du réacteur nucléaire.

Pour cela, on coupe les grosses conduites 86 et 88 et on extrait l'échangeur intermédiaire de la cuve par désolidarisation de la bride 30b. Hors de la cuve, on découpe la virole 30 à environ 300 mm au-dessus de la plaque de base 36. Les conduites 52a et 54a sont également découpées. Puis on meule la soudure de la virole de supportage 60 sur le manchon 61 solidaire de la plaque de base 36. On peut alors déposer le module 36 sur lequel il faut intervenir.

Il découle de la description précédente que l'échangeur semi-modulaire selon l'invention comporte de nombreux avantages par rapport à ceux de l'art antérieur. Les dilatations thermiques des conduites secondaires d'entrée et de sortie sont mieux absorbées sans toutefois compliquer la structure. De plus, l'échangeur a un meilleur comportement en cas de séismes auzquels serait soumis le réacteur.

### Revendications

1. Echangeur de chaleur pour un réacteur nucléaire dont la cuve est obturée par une dalle (4), l'échangeur étant du type comportant une virole externe (30) à axe vertical, ladite virole étant munie à son extrémité supérieure d'une bride de supportage (30b) qui repose sur la dalle par l'intermédiaire d'un manchon de supportage (34), ladite virole (30) étant prolongée par un dôme supérieur (32) raccordé à la virole, un collecteur d'entrée (82) et un collecteur de sortie (84) pour un fluide secondaire, ces collecteurs définissant un premier sous-ensemble disposé à l'intérieur du dôme supérieur, plusieurs modules d'échange thermique (38) définissant un deuxième sous-ensemble disposé dans la virole externe, chacun desdits modules comprenant des tubes verticaux sensiblement droits (40) débouchant dans une chambre d'entrée de fluide secondaire (44a) et dans une chambre de sortie de fluide secondaire (42a) et des orifices (52a, 54a) pour l'introduction et la sortie d'un fluide primaire dans chaque module, plusieurs conduites d'alimentation (52a) reliant le collecteur d'entrée à chaque chambre d'entrée, plusieurs conduites d'évacuation (54a) reliant le collecteur de sortie à chaque chambre de sortie et plusieurs plaques de protection biologiques (94), ces plaques définissant un troisième sous-ensemble disposé dans la virole externe (30) au niveau de ladite dalle, caractérisé en ce que ledit échangeur comprend de plus au moins une plaque de base (36, 110) fixée sur sa périphérie à ladite virole externe, chacun desdits sous-ensembles étant relié à ladite virole externe par une seule plaque de base (36, 110), chaque module étant suspendu à la plaque de base correspondante (36) par une virole de supportage (60) traversant cette dernière et reliée, d'une part, à l'extrémité supérieure du module et, d'autre part, à la plaque de base correspondante, lesdites conduites d'alimentation (52a) et lesdites conduites d'évacuation (54) traversant d'une manière étanche ladite plaque de base correspondante (36) et comprenant entre lesdits collecteurs et ladite plaque de base correspondante des parties prévues pour absorber l'expansion thermique desdites conduites, l'étanchéité entre les conduites d'alimentation et la plaque de base étant réalisée par des moyens d'étanchéité extensibles (76).

2. Echangeur selon la revendication 1, caractérisé en ce qu'il comprend une seule plaque de base (36) en dessous de ladite dalle, les collecteurs étant reliés à ladite plaque de base par une structure de supportage (80) solidaire par son extrémité inférieure de la plaque de base (36).

3. Echangeur selon la revendication 1, caractérisé en ce qu'une deuxième plaque de base (110) est prévue au niveau de ladite bride de supportage, les collecteurs étant reliés à cette deuxième plaque de base par une structure de supportage (112, 114) solidaire par son extrémité inférieure de la deuxième plaque de base (110).

4. Echangeur selon l'une quelconque des revendications 1 à 3, caractérisé en ce que lesdites parties des conduites d'alimentation (52a) et d'évacuation (54a) ont la forme d'une portion d'hélice faisant un angle d'environ 180°.

5. Echangeur selon l'une quelconque des revendications 1 à 4, caractérisé en ce que les chambres de sortie (42a) sont disposées à la partie supérieure des modules d'échange (38) et en ce que les conduites d'évacuation (54a) sont disposées coaxialement à l'intérieur des viroles de supportage (60), ces dernières assurant ainsi la traversée étanche de la plaque de base (36) par les conduites d'évacuation du fluide secondaire.

6. Echangeur selon l'une quelconque des revendications 1 à 5, caractérisé en ce que les moyens d'étanchéité extensibles sont des soufflets de dilatation (76).

7. Echangeur selon l'une quelconque des revendications 1 à 6, caractérisé en ce que le collecteur de sortie (84) est disposé au-dessus de collecteur d'entrée (82) et comprend à son extrémité supérieure un prolongement (90) apte à coopérer avec une pièce de guidage (92) solidaire du dôme (32).

**Patentansprüche**

1. Wärmetauscher für einen Kernreaktor, dessen Becken durch eine Deckplatte (4) verschlossen ist, mit einem mit seiner Achse senkrecht angeordneten äußeren Mantel (30), welcher mit einem an seinem oberen Teil angeordneten Tragring (30b) unter Zwischenschaltung einer Tragbuchse (34) auf der Deckplatte ruht und durch eine am Mantel (30) angebrachte obere Kuppel (32) verlängert ist, mit einem Einlaßsammler (82) und einem Auslaßsammler (84) für ein Sekundärfluid, welche zusammen eine im Inneren der oberen Kuppel angeordnete erste Unterbaugruppe bilden, mit einer Anzahl von Wärmetauschermodulen (38) welche eine im äußeren Mantel angeordnete zweite Unterbaugruppe bilden und jeweils senkrechte und im wesentlichen gerade, in einer Eintrittskammer (44a) für das Sekundärfluid und einer Austrittskammer (42a) für das Sekundärfluid ausmündende Rohre (40) sowie Öffnungen (52a, 54a) für den Eintritt und den Austritt eines Primärfluids in das bzw. aus dem jeweiligen Modul aufweisen, mit einer Anzahl von Speiseleitungen (52a), welche den Einlaßsammler mit jeder Eintrittskammer verbinden, einer Anzahl von Rückflußleitungen (54a), welche den Auslaßsammler mit jeder Austrittskammer verbinden, und mit einer Anzahl von biologischen Schutzplatten (94), welche eine in der Höhe der Deckplatte im äußeren Mantel (30) angeordnete dritte Unterbaugruppe darstellen, dadurch gekennzeichnet, daß der Wärmetauscher wenigstens eine mit ihrem Umfangsrand am äußeren Mantel befestigte Basisplatte (36, 110) aufweist, daß jede der Unterbaugruppen über eine einzige Basisplatte (36, 110) mit dem äußeren Mantel verbunden ist, daß jedes Modul an der jeweiligen Basisplatte (36) mittels einer Tragbuchse (60) aufgehängt ist, welche die Basisplatte durchsetzt und einerseits mit dem oberen Ende des jeweiligen Moduls und andererseits mit der jeweiligen Basisplatte verbunden ist, daß die Speiseleitungen (52a) und die Rückflußleitungen (54a) abdichtend durch die betreffende Basisplatte (36) hindurchgeführt sind und zwischen dem jeweiligen Sammler und der Basisplatte für die Absorption der Wärmedehnung der Leitungen bestimmte Abschnitte aufweisen, und daß die Abdichtung zwischen den Speiseleitungen und der Basisplatte mittels dehnbarer Dichtungseinrichtungen (76) gebildet ist.

2. Wärmetauscher nach Anspruch 1, dadurch gekennzeichnet, daß er eine einzige, unterhalb der Deckplatte angeordnete Basisplatte (36) aufweist, und daß die Sammler mit der Basisplatte über ein Tragwerk (80) verbunden sind, welches an seinem unteren Ende fest mit der Basisplatte (36) verbunden ist.

3. Wärmetauscher nach Anspruch 1, dadurch gekennzeichnet, daß eine zweite Basisplatte (110) in Höhe des Tragrings vorgesehen ist und daß die Sammler mit der zweiten Basisplatte über ein Tragwerk (112, 114) verbunden sind, welches an seinem unteren Ende fest mit der zweiten Basisplatte (110) verbunden ist.

4. Wärmetauscher nach einem der Ansprüche 1 bis 4, dadurch gekennzeichnet, daß die genannten Abschnitte der Speiseleitungen (52a) und Rücklaufleitungen (54a) die Form eines sich über einen Winkel von etwa 180° erstreckenden Teils einer Schraubenlinie haben.

5. Wärmetauscher nach einem der Ansprüche 1 bis 4, dadurch gekennzeichnet, daß die Austrittskammern (42a) am oberen Teil der Wärmetauschermodule (38) angeordnet sind und daß die Rückflußleitungen (54a) koaxial im Inneren der Tragbuchsen (60) angeordnet sind, so daß die Letzteren die abdichtende Durchführung der Rückflußleitungen für das Sekundärfluid durch die Basisplatte (36) gewährleisten.

6. Wärmetauscher nach einem der Ansprüche 1 bis 5, dadurch gekennzeichnet, daß die dehnbaren Dichtungseinrichtungen Dehnungsbalgen (76) sind.

7. Wärmetauscher nach einem der Ansprüche 1 bis 6, dadurch gekennzeichnet, daß der Auslaßsammler (84) oberhalb des Einlaßsammlers (82) angeordnet ist und an seinem oberen Ende eine Verlängerung (90) aufweist, welche mit einem fest mit der Kuppel (32) verbundenen Führungsstück (92) zusammenwirkt.

**Claims**

1. Heat exchanger for a nuclear reactor whose vessel is closed by a slab (4), the exchanger being of the type having an external shell (30) with a vertical axis, said shell having at its upper end a support flange (30b) which bears on the slab by means of a support sleeve (34), said shell being extended by an upper dome (32) connected to the shell, an inlet manifold (82) and an outlet manifold (84) for a secondary fluid, such manifolds defining a first sub-assembly located in the interior of the upper dome, a plurality of heat exchange modules (38) defining a second sub-assembly located within the external shell, each of said modules comprising substantially straight vertical tubes (40) opening into a secondary fluid inlet chamber (44a) and into a secondary fluid outlet chamber (42a) and ports (52a, 54a) for the supply and outlet of a primary fluid for each module, a plurality of supply conduits (52a) connecting the inlet manifold to each inlet chamber, a plurality of outlet conduits (54a) connecting the outlet manifold to each outlet chamber, and a plurality of biological protection plates (94), said plates defining a third sub-assembly located within the external shell (30) at the level of said slab, characterized in that said exchanger additionally comprises at least one bed plate (36, 110) whose periphery is fixed to the said external shell, each of said sub-assemblies being connected to said external shell by a single bed plate (36, 110), each module being suspended from a respective bed plate (36) by a supporting shroud (60) passing through the latter (plate) and connected, on the one hand, to the upper end of the module and, on the other hand, to the respective bed plate, said supply conduits (52a) and said outlet conduits (54) passing in a sealed manner through the respective bed plate (36), and comprising between said manifolds and said respective bed plate, parts provided to absorb thermal expansion of said conduits, the seal between said supply conduits and the bed plate being provided by extensible sealing means (76).

2. Exchanger according to claim 1, characterized in that it comprises a single bed plate (36) below said slab, the manifolds being connected to said bed plate by a support structure (80) whose lower end is fixed to the bed plate (36).

3. Exchanger according to claim 1, characterized in that a second bed plate (110) is provided at the level of said support flange, the manifolds being connected to said second bed plate by a support structure (112, 114) whose lower end is fixed to the second bed plate (110).

4. Exchanger according to any one of claims 1 to 3, characterized in that said parts of the supply conduits (52a) and outlet conduits (54a) are in the form of a portion of a helix making an angle of about 180°.

5. Exchanger according to any one of claims 1 to 4, characterized in that the outlet chambers (42a) are located in the upper part of the exchange modules (38), and in that the outlet conduits (54a) are located coaxially within the supporting shrouds (60), the latter thereby ensuring sealed passage of the secondary fluid outlet conduits through the bed plate (36).

6. Exchanger according to any one of claims 1 to 5, characterized in that the extensible sealing means are expansion bellows (76).

7. Exchanger according to any one of claims 1 to 6, characterized in that the outlet manifold (84) is located above the inlet manifold (82), and has, at its upper end, an extension member (90) adapted to co-operate with a guide member (92) fixed to the dome (32).

FIG.1

FIG.2a

FIG.2b

FIG.3a

FIG. 3b

FIG. 3c

FIG. 4